# EUROPEAN PATENT SPECIFICATION

(11) **EP 1 333 743 B1**
(45) Date of publication and mention of the grant of the patent: **29.12.2004**
(21) Application number: 01976044.6
(22) Date of filing: 11.10.2001
(51) Int. Cl.: A47J 37/06, A47J 43/18

(54) **A GRILL FOR SUPPORTING FOOD**
GRILL ZUM AUFLEGEN VON NAHRUNGSMITTELN
GRIL DESTINE A RECEVOIR DES ALIMENTS

(30) Priority: 13.10.2000 DK 200001530
(43) Date of publication of application: 13.08.2003
(73) Proprietor: Bach, Carl Christian, 2100 Copenhagen (DK)
(72) Inventor: Bach, Carl Christian, 2100 Copenhagen (DK)
(74) Representative: Holme, Edvard
(86) International application number: PCT/DK2001/000662
(87) International publication number: WO 2002/030252

(56) References cited:
- FR-A- 2 201 858
- GB-A- 2 292 514
- US-A- 4 481 874
- US-A- 5 442 999

## Description

The invention relates to a grill of the kind which is used for supporting food to be heat-treated and where the grill consists of at least one grill element in form of a single bar shaped with a number of grill bars extending in continuation of each other via bends and forming said support together with the bends.

Such grills can e.g. be a wire cooking tray/gridiron for an oven or a grilling grid for use in e.g. an outdoor grill.

A conventional wire cooking tray/gridiron is a grid iron with a grid in form of a number of relatively small quadrangular meshes. This known grid iron is difficult to clean as the small mesh size of the grid makes it difficult to reach corners and joints which therefore only can be cleaned by means of special brushes or by using strong and polluting chemical oven cleaners.

An alternative, conventional wire cooking tray/gridiron/grilling grid consists of a large number of parallel grill bars welded onto transverse supporting bars. This grill is also very difficult to clean as layers caked during cooking of food and accumulated in among other things the joints between the grill bars and the supporting bars only can be removed by intensive mechanical treatment. Even at mechanical removal of the layers, it is still difficult to ensure complete cleaning of the grill which therefore often subsequently has to be cleaned by chemical treatment. Layers left on the grill can serve as nutritious substances to micro-organisms, and these grills are therefore very unhygienic.

Many users of outdoor grills merely scrub or brush the used grilling grid with a hard steel brush prior to renewed use in order to thereby remove visible and relatively heavy layers.

However, there are many smaller charred particles left on the grill after this treatment, and it is known that such particles contain undesirable toxic compounds (Ames, J.M., Control of the Maillard reaction in food systems, *Trends in Food Science & Technology Dec. 1990,* pp. 150-154, Elsevier Science Publisher Ltd.; Nursten, H.E. (1980-1981), *Food Chem.* 6, pp. 263-277).

From the French patent FR 2,201,858 is known a grill for a frying pan having a plane circular grilling grid adapted to be placed on an edge or projection along the periphery of the frying pan. The grill is designed especially for this frying pan but on account of the edge, it is not necessary to provide this grill with legs just as handles would make it inexpedient to work with the frying pan. The French grill would not be useful in e.g. a dripping pan where it would rest on the bottom.

From the British patent GB 25746 is known a grill device where the item to be grilled or roasted is placed either on a skewer or on hairpin-shaped grill bars with loops. The grill device has to be hung on an edge by means of hooks to place the item at a distance from the heat source. In addition, the grill bars loop in such a way that they are in close contact with each other and therefore difficult to clean in the places of contact.

The difficulties in cleaning the above known grills therefore make these grills very unhygienic to use and usage of poorly cleaned grills furthermore present a considerable health risk.

The inventor of the present invention has now realized that there is a so far unmet need for a grill which can be cleaned completely in a simple way without use of major mechanical action and/or highly polluting chemical cleaners.

Therefore it is the object of the invention to provide a grill of the kind mentioned in the opening paragraph, which is simple and inexpensive to manufacture and can be cleaned in a simple and inexpensive way with a high degree of cleanliness without great effort.

A second object of the invention is to provide a grill which easily can be placed properly in a dripping pan or a dish and can be removed from the dripping pan or dish easily as desired.

The novel and unique features according to the invention, whereby this is achieved, is the fact that the bar additionally is designed with at least two legs and/or two handles each of which extending in continuation of a grill bar or a handle via at least one bend and that said leg can serve as handle and said handle can serve as leg when the grill is turned over.

When a grill element is designed of one single bar with grill bars formed by bending of the bar, the grill element can easily be manufactured without thereby having to use expensive special tools.

In the same way, at least two legs and/or two handles can be made of the bar in a simple way, each leg and/or handle extending in continuation of a grill bar via at least one bend in such a way that two grill bars, a grill bar and a leg, a bend and a leg or a bend and a grill bar respectively are made at a distance from each other so that neither bends, legs or grill bars will touch each other. Hereby, it is advantageously obtained that there will be room to clean the grill along the periphery of the entire bar and in its full length easily and completely.

The above-mentioned distance between bends, legs or grill bars can be so great that it is possible to form a scouring pad or cloth around the bar and pass the thus formed scouring pad or cloth along the bar so that the grill element can be cleaned in one continuous cleaning operation quickly and simply.

An advantageous minimum distance between legs, handles and/or grill bars can be about 1 cm but the invention is not limited to this distance as grills can be provided with any distances between legs, handles and/or grill bars within the scope of the present invention. Distances in the interval of e.g. 2-15 cm are therefore also included in the invention.

The grill bars of the grill element can be extending on a level displaced in relation to the legs/handles and can in an especially advantageous way be displaced in such a way that the plane of the grill bars is displaced more to one side of the legs/handles than to the other side. Such a displacement of the plane of the grill bars makes it possible to use the same grill at two different distances from the heat utilised for treating the foodstuff.

When at least two grill bars are parallel, a plane and safe support of the food which is to rest on the grill element is obtained as the distance between the grill bars advantageously can be so short that the food cannot pass through the openings between the grill bars but so great that the grill bars still can be cleaned easily. The distance between the grill bars can vary, and a bar can advantageously and easily be bent to provide a grill element of different distances between bends, legs/handles and grill bars.

When the leg of the bar continuously pass into each other, a stable and safe base for the grill element is formed. Thereby, the advantage is obtained in that the grill element does not have any free ends requiring cleaning.

A grill element can advantageously be made of spring steel which allow the grill element to be individually adapted to support food of different dimensions. A grill element manufactured in this way can be especially expedient for use in the cases where the size of the food changes during the heat treatment.

An especially expedient and advantageous embodiment comprises that the bar is at least partially coated by a non-stick coating. The cooked food easily lets go of such a grill element which furthermore can be cleaned merely by means of a damp cloth.

Several grill elements can simply be placed partially inserted in each other in order to form a greater grill having a short distance between the grill bars during the cooking of the food. After use, the grill elements are separated and cleaned one by one. A single grill element can advantageously have such a size that it can fit a conventional kitchen sink or washing tub.

A grill element according to the present invention can furthermore easily be placed and cleaned in a dishwasher in which it will only occupy little space.

The invention will be explained in greater detail below, describing only exemplary embodiments with reference to the drawing, in which
Fig. 1 is a perspective view of a first embodiment of a grill element according to the invention,
Fig. 2 is a perspective view of two of the grill elements in fig. 1 partially inserted in each other and placed in a dripping pan,
Fig. 3 is a perspective view of a second embodiment of the invention, and
Fig. 4 is a perspective view of a third embodiment of the invention.

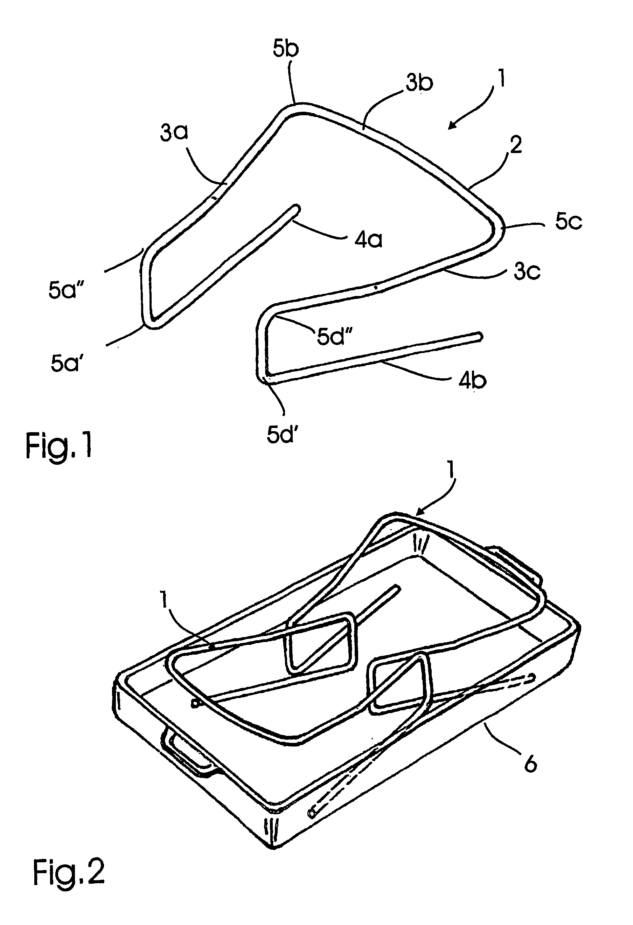

Fig. 1 shows a first embodiment of a grill element 1 according to the invention. The grill element 1 is made of one single bar 2 which is bent into three grill bars 3a,3b,3c and two legs 4a,4b in this case. The leg 4a is connected to the grill bar 3a via the bend 5a' and 5a'', the grill bar 3a is extending into the grill bar 3b via the bend 5b. The grill bar 3b is extending into the grill bar 3c via the bend 5c, the grill bar 3c is extending into the leg 4b via the bend 5d'' and 5d'.

An advantageous diameter of the bar 2 is between 3 and 7 mm, and this first embodiment can advantageously be made of spring steel so that it is possible to adapt it to e.g. dishes and dripping pans by adjusting the distance between e.g. the grill bars 3a and 3c by means of a compressive or tractive force.

In the embodiment of fig. 1, the grill bars 3a,3c are shown having a small inclination in relation to the legs 4a,4b so that there is a greater distance between the bend 5b and the free end of the leg 4a than between the bend 5a' and the bend 5a''. Such a design of the grill element is especially expedient at cooking of e.g. a leg of lamb where the thickness of the meat can vary and a part of the leg of lamb therefore has to be closer to the heat than the rest of the leg of lamb in order to thereby obtain a uniform heat treatment of the entire leg of lamb in one operation.

Fig. 2 shows two grill elements 1 inserted partially into each other and placed in a dripping pan 6. The two grill elements 1 together form a grill having closely spaced grill bars but the grill elements can be removed individually from the dripping pan and cleaned after use.

Alternatively, several grill elements 1 can be placed in a circle where the grill bar 3b of the individual grill element 1 is pointing away from the centre of the circle and the bends 5a'' and 5d" are pushed against each other.

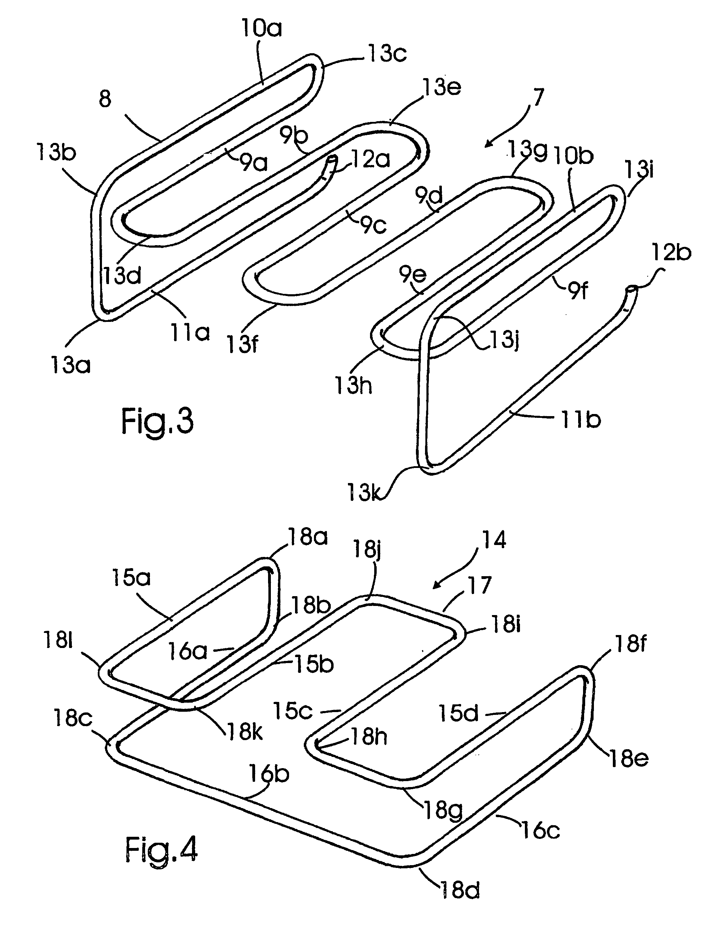

Fig. 3 shows a third embodiment of a grill element 7 according to the invention. The grill element 7 is made of one single bar 8 in this case bent into six grill bars 9a,9b,9c,9d,9e,9f, two handles 10a,10b and two legs 11a,11b ending in the respective free ends 12a,12b of the bar 8.

In the case shown, the leg 11a is extending into the handle 10a via about 90° bends 13a,13b. The handle 10a is further extending into the grill bar 9a via about 180° bend 13c. The grill bar 9a is further extending into the grill bar 9b via about 180° bend 13d, the grill bar 9b is further extending into the grill bar 9c via about 180° bend 13e, the grill bar 9c is further extending into the grill bar 9d via about 180° bend 13f, the grill bar 9d is further extending into the grill bar 9e via 180° bend 13g, the grill bar 9e is further extending into the grill bar 9f via 180° bend 13h, the grill bar 9f is further extending into the handle 10b via about 180° bend 13i and further into the leg 11b via the two about 90° bends 13j,13k, the leg 11b ending in the free end 12b of the bar 8.

In the case shown, the grill bars 9a,9b,9c,9d,9e,9f are extending on the same level and this level is shown in the figure closer to the level of the handles 10a,10b than the level of the legs 11a,11b. By turning the grill element 7 over so that the handles form the legs and vice versa, the grill element 7 shown can advantageously be used as support to one or several foods at two different heights.

Between handles, legs, bends and grill bars respectively, the grill element 7 also has a distance which advantageously makes it possible to clean the grill element easily. Advantageously, the grill element 7 can have a non-stick coating of e.g. Teflon® (registered trademark) which makes the cleaning process even more easy. Several grill elements 7 can be joined to form a larger grill, and the outer dimensions of the grill element can especially advantageously be of a size that fit a dish.

Fig. 4 shows a third embodiment of a grill element 14 made of a bar 17. The bar 17 of the grill element is bent to form four grill bars 15a,15b,15c,15d and three legs 16a,16b,16c. The grill bar 15a is extending into the leg 16a via about 90° bends 18a and 18b, the leg 16a is extending into the leg 16b via about 90° bend 18c, the leg 16b is extending into the leg 16c via about 90° bend 18d, the leg 16c is further extending into the grill bar 15d via about 90° bends 18e and 18f, the grill bar 15d is further extending into the grill bar 15c via about 90° bends 18g and 18h, the grill bar 15c is further extending into the grill bar 15b via about 90° bends 18i and 18j, the grill bar 15b is ending in the grill bar 15a via about 90° bends 18k and 181.

As shown in the figure and described above, this embodiment has no free ends and it is therefore especially simple to clean. Like the second embodiment, the grill element can be turned according to the user's wishes and needs so that e.g. the grill bars 15a,15d, shown in fig. 4 serving as handles, instead will make up the legs of the grill element.

As already mentioned, a grill element can be turned in many different ways within the scope of the invention to serve as support to food to be cooked, and grill elements of different designs and sizes can be joined to a variety of larger grills within the scope of the invention.

In the cases shown in figs. 3 and 4, the bends are about 90° and about 180° but larger or smaller angles of bending are also included in the invention. The invention is not limited to grill bars having a horizontal plane in the position of use as grill bars of varying heights above the base on which the grill element is resting also are possible within the scope of the invention.

A grill element can be manufactured of one or several materials and preferably of a heat-proof material such as e.g. metal, glass and plastic but grill elements of ceramic are also anticipated.

Especially plastic materials are well suited for manufacture of disposable grill elements made in accordance with the invention. Plastic materials are inexpensive and grill elements of this material can therefore simply be discarded after use.

## Claims

1. A grill of the kind which is used for supporting food to be heat-treated and where the grill consists of at least one grill element (1;7;14) in form of one single bar (2;8;17) shaped with a number of grill bars (3a,3b,3c; 9a,9b,9c,9d,9e,9f;15a,15b,15c,15d) extending in continuation of each other via bends (5b,5c;13d,13e,13f, 13g,13h;18g,18h,18i,18j,18k,18l) and forming said support together with the bends, **characterised in**
- **that** the bar (2;8;17) is additionally designed with at least two legs (4a,4b;11a,11b;16a,16b,16c) and two handles (3a,3b,3c;10a,10b;15a,15d), each extending in continuation of a grill bar or a handle via at least one bend (5a',5a'',5d',5d'',13a,13b, 13c,13i,13j,13k;18a,18b,18c,18d,18e,18f), and
- **that** said legs (4a,4b;11a,11b;16a,16b,16c) can serve as handles and said handles (3a,3b,3c;10a,10b;15a,15d) can serve as legs when the grill is turned over.

2. A grill according to claim 1, **characterised in that** two grill bars, a grill bar and a leg, a bend and a leg or a bend and a grill bar respectively are made at a distance from each other.

3. A grill according to claim 1 or 2, **characterised in that** two grill bars, a grill bar and a leg, a bend and a leg or a bend and a grill bar respectively are made at a distance from each other and this distance is greater than about 1 cm.

4. A grill according to any of the claims 1, 2 or 3, **characterised in that** the grill bars of the grill element are extending on a level displaced in relation to the legs/handles.

5. A grill according to any of the claims 1-4, **characterised in that** the legs of the bar continuously pass into each other.

6. A grill according to any of the claims 1-5, **characterised in that** at least two grill bars and/or two legs/handles in a grill element are parallel.

7. A grill according to any of the claims 1-6, **characterised in that** the grill element is made of spring steel.

8. A grill according to any of the claims 1-7, **characterised in that** the bar is at least partially coated by a non-stick coating.

## Patentansprüche

1. Ein Grill von der Art, der zur Unterstützung von Nahrungsmitteln genutzt wird, die hitzebehandelt werden sollen, bei denen der Grill aus wenigstens einem Grillelement (1; 7; 14) in Form eines einzelnen Stabes (2; 8; 17) besteht, der in einer Anzahl von Grillstäben (3a, 3b, 3c; 9a, 9b, 9c, 9d, 9e, 9f; 15a, 15b, 15c, 15d) ausgeformt ist, die sich in Fortsetzung voneinander über Krümmungen (5b, 5c; 13d, 13e, 13f, 13g, 13h; 18g, 18h, 18i, 18j, 18k, 18l) erstrecken und die die Unterstützung zusammen mit den Krümmungen bilden, **dadurch gekennzeichnet**, das
- der Stab (2; 8; 17) zusätzlich mit wenigstens 2 Beinen (4a, 4b; 11a, 11b; 16a, 16b, 16c) und zwei Handgriffen (3a, 3b, 3c; 10a, 10b; 15a, 15d) ausgebildet ist, wobei jeder in Verlängerung eines Grillstabs oder eines Handgriffes über wenigstens eine Krümmung (5a', 5a'', 5d', 5d", 13a, 13b, 13c, 13i, 13j, 13k; 18a, 18b, 18c, 18d, 18e, 18f) ausgebildet ist, und
- wobei diese Beine (4a, 4b; 11a, 11b; 16a, 16b, 16c) als Handgriffe dienen können und diese Handgriffe (3a, 3b, 3c; 10a, 10b; 15a, 15d) als Beine dienen können, wenn der Grill umgedreht wird.

2. Ein Grill nach Anspruch 1, **dadurch gekennzeichnet, dass** zwei Grillstäbe, ein Grillstab und ein Bein, eine Krümmung und ein Bein oder eine Krümmung und ein Grillstab jeweils mit einer Entfernung voneinander beabstandet ausgebildet sind.

3. Ein Grill nach Anspruch 1 oder 2 **dadurch gekennzeichnet, dass** zwei Grillstäbe, ein Grillstab und ein Bein, eine Krümmung und ein Bein oder eine Krümmung und ein Grillstab jeweils mit Entfernung zueinander ausgebildet sind und diese Entfernung größer als ungefähr 1 cm ist.

4. Ein Grill nach einem der Ansprüche 1, 2 oder 3, **dadurch gekennzeichnet, dass** die Grillstäbe und das Grillelement sich auf einem Niveau beabstandet bezüglich der Beine/Handgriffe erstrecken.

5. Ein Grill nach einem der Ansprüche 1 - 4, **dadurch gekennzeichnet, dass** die Beine des Stabs kontinuierlich ineinander übergehen.

6. Ein Grill nach einem der Ansprüche 1- 5, **dadurch gekennzeichnet, dass** wenigstens zwei Grillstäbe und/oder Beine/Handgriffe in einem Grillelement parallel verlaufen.

7. Ein Grill nach einem der Ansprüche 1 - 6, **dadurch gekennzeichnet, dass** das Grillelement aus Federstahl ausgeführt ist.

8. Ein Grill nach einem der Ansprüche 1 - 7, **dadurch gekennzeichnet, dass** der Stab wesentlich teilweise durch eine Antihaftbeschichtung beschichtet ist.

## Revendications

1. Grille de la sorte utilisée pour soutenir la nourriture afin d'être soumise à un traitement thermique et où la grille est constituée d'au moins un élément de grille (1 ; 7 ; 14) sous la forme d'une seule barre (2 ; 8 ; 17) mise en forme avec un certain nombre de barres de grille (3a, 3b, 3c ; 9a, 9b, 9c, 9d, 9e, 9f; 15a, 15b, 15c, 15d) s'étendant chacune dans le prolongement de l'autre par l'intermédiaire des parties courbées (5b, 5c ; 13d, 13e, 13f, 13g, 13h ; 18g, 18h, 18i, 18j, 18k, 18l) et formant ledit support conjointement avec les parties courbées, **caractérisée en ce**
- **que** la barre (2 ; 8 ; 17) est en plus conçue avec au moins deux pieds (4a, 4b ; 11a, 11b ; 16a, 16b, 16c) et deux poignées (3a, 3b, 3c ; 10a, 10b ; 15a, 15d), chacun s'étendant dans le prolongement d'une barre de grille ou d'une poignée par l'intermédiaire d'au moins une partie courbée (5a', 5a'', 5d', 5d'', 13a, 13b, 13c, 13i, 13j, 13k ; 18a, 18b, 18c, 18d, 18e, 18f), et
- **que** lesdits pieds (4a, 4b ; 11a, 11b ; 16a, 16b, 16c) peuvent servir de poignées et lesdites poignées (3a, 3b, 3c ; 10a, 10b ; 15a, 15d) peuvent servir de pieds lorsque la grille est retournée.

2. Grille selon la revendication 1, **caractérisée en ce que** deux barres de grille, une barre de grille et un pied, une partie courbée et un pied ou une partie courbée et une barre de grille sont respectivement fabriqués à distance les uns des autres.

3. Grille selon la revendication 1, **caractérisée en ce que** deux barres de grille, une barre de grille et un pied, une partie courbée et un pied ou une partie courbée et une barre de grille sont respectivement fabriqués à distance les uns des autres et cette distance est supérieure à environ 1 cm.

4. Grille selon l'une quelconque des revendications 1, 2 ou 3, **caractérisée en ce que** les barres de grille de l'élément de grille se prolongent à un niveau déplacé par rapport aux pieds/poignées.

5. Grille selon l'une quelconque des revendications 1 à 4, **caractérisée en ce que** les pieds de la barre passent sans interruption l'un dans l'autre.

6. Grille selon l'une quelconque des revendications 1 à 5, **caractérisée en ce qu'**au moins deux barres de grille et/ou deux pieds/poignées dans un élément de grille sont parallèles.

7. Grille selon l'une quelconque des revendications 1 à 6, **caractérisée en ce que** l'élément de grille est fait d'acier à ressort.

8. Grille selon l'une quelconque des revendications 1 à 7, **caractérisée en ce que** la barre est au moins partiellement enduite d'un revêtement anti-adhésif.
